# EUROPÄISCHE PATENTSCHRIFT

(11) **EP 0 810 256 B1**
(45) Veröffentlichungstag und Bekanntmachung des Hinweises auf die Patenterteilung: **10.09.2003**
(21) Anmeldenummer: 97107910.8
(22) Anmeldetag: 15.05.1997
(51) Int. Cl.: C08J 9/08, C08J 9/12

(54) **Verfahren zur Herstellung von elastischen Polyurethanblockschaumstoffen**
Process for the production of flexible slabstock polyurethane foams
Procédé de préparation des blocs flexibles en mousse de polyuréthanne

(30) Priorität: 28.05.1996 DE 19621305
(43) Veröffentlichungstag der Anmeldung: 03.12.1997
(73) Patentinhaber: BAYER AG, 51368 Leverkusen (DE)
(72) Erfinder: Illger, Hans-Walter, Dr., 51503 Rösrath (DE); Haas, Peter, Dr., 42781 Haan (DE); Eiben, Robert, Dr., 51061 Köln (DE)

(56) Entgegenhaltungen:
- EP-A- 0 547 764
- DE-C- 4 422 568
- US-A- 5 120 770

## Beschreibung

Die Herstellung von elastischen Blockschaumstoffen für unterschiedlichste Anwendungen erfolgte im Bereich unterer Rohdichten mit organischen, vollhalogenierten Treibmitteln wie Monofluortrichlormethan, das aus ökologischen Gründen nicht mehr verwendet wird. Im Rahmen dieser Umstellung wird nun häufig Dichlormethan (MC) verwendet. Auch dieses Treibmittel bewirkt verschäumungstechnisch zwei Effekte; zum einen die Erniedrigung der Rohdichte als eigentlichen Treibeffekt und zum anderen der Entzug von Energie aus dem reagierenden System beim Übergang in den gasförmigen Zustand. Hierdurch lassen sich bei Einsatz von größeren Mengen an Wasser und somit auch an Isocyanaten in gewissem Rahmen Variationen der Härte im unteren Rohdichtebereich einstellen. Diese Typen können alleine auf der Basis von Wasser nicht hergestellt werden, da die Exothermie im Innern Temperaturen ergibt, die zumindest Kernverfärbungen bewirken. Ein weiterer Schritt in Richtung eines ökologisch noch weiter entwickelten Herstellungsprozesses ist die Verwendung von flüssigem Kohlendioxid als Treibmittel, wie zum Beispiel in der DE 4 422 568 beschrieben. Entscheidend für die Nutzung dieses Verfahrens ist die Funktionsfähigkeit der Entspannungskammer mit Siebeinsätzen vor dem Rohstoffaustrag.

Aufgrund unterschiedlicher Verdampfüngsenergien der Treibmittel CO₂ und MC ist es nicht möglich, gleiche Schaumstofftypen in sicherem Produktionsprozeß herzustellen, da die Blockinnentemperatur bei vergleichbaren Rohdichten unterschiedlich ist

US-A 5,120 770 offenbart die Verwendung von flüssigem CO₂ ggf. in Kombination mit Wasser als Treibmittel für die Herstellung von Polyurethan-Schäumen. Als Isocyanatreaktive Verbindungen werden Polyether- und Polyesterpolyole einer OH-Funktionalität von 2 bis 4 beschrieben, die einzeln oder in Mischungen ggf. unter Zugabe weiterer niedermolekularer drei- und vierwertigen Alkoholen verwendet werden.

Aufgabe der vorliegenden Erfindung war es daher, elastische Polyurethanschaumstoffe unter Verwendung von Kohlendioxid als Treibmittel zur Verfügung zu stellen, welche gleiche oder bessere Qualifikation bezüglich Rohdichte, Härte und Elastizität wie mit herkömmlichen physikalischen Treibmitteln hergestellte Schaumstoffe aufweisen.

Es wurde nun gefunden, daß durch spezielle Polyole und flüssigem CO₂ als zusätzliche Treibmittel produktionstechnisch und bezüglich der mechanischen Eigenschaften einwandfreie Schaumstoffqualitäten herstellbar sind, die sich durch höhere Stauchhärten bei besserer Elastizität auszeichnen.

Gegenstand der Erfindung ist ein Verfahren zur Herstellung von elastischen Blockschaumstoffen durch Umsetzung von
A) Polyisocyanaten,
B) mindestens zwei gegenüber Isocyanaten reaktionsfähige Wasserstoffatome aufweisende Verbindungen vom Molekulargewicht 400 bis 10 000,
C) Wasser und gegebenenfalls organischen Treibmitteln
D) Stabilisatoren bekannter Art,
E) Aktivatoren bekannter Art
F) weiteren an sich bekannten Hilfs- und Zusatzmitteln
   dadurch gekennzeichet, daß die Polyolkomponente B) zusammengesetzt ist aus
   B1) mindestens zwei gegenüber Isocyanaten reaktionsfähige Wasserstoffatome aufweisende Verbindungen vom Molekulargewicht 2 000 bis 10 000 und einer Funktionalität von 2 bis 4,
   B2) mindestens vier gegenüber Isocyanaten reaktionsfähige Wasserstoffatome aufweisende Verbindungen vom Molekulargewicht 400 bis 4 000, bevorzugt 400 bis 3 000 einer Funktionalität von 4 bis 8, bevorzugt 4 bis 6,
   B3) gegebenenfalls niedermolekularen Vernetzern der Molmasse 32 bis 399 und das als zusätzliches Treibmittel,
G) flüssiges CO₂, das in einer feinmaschige Netze enthaltenden Entspannungskammer vor dem Austritt auf das Transportband entspannt wird, Verwendung findet.

Die Kombination aus den Polyolen B1) und B2) sowie flüssigem CO₂ führt zu Schaumstoffen mit problemlosen Laufzeiten bei Blocklängen von 300 - 700 m, ohne daß es zu Durchsatzproblemen im empfindlichen Bereich der Entspannungskammer kommt, wobei zudem Härten erzielt werden, die bei gleicher Isocyanatmenge über dem der üblichen Schaumstoffe auf konventioneller Polyolbasis liegen. Die Polyolkomponente B2) wird in Mengen von 2,5 - 30, bevorzugt 2,5 - 20 Teile, bezogen auf 100 Teile B1) und B2) verwendet. Als Starter für die Polyolkomponente B2) werden Mannit, Sorbit, Lactose oder Sucrose verwendet. Diese werden durch Addition von Oxiranen in Polyole B2) des angegebenen Molmassenbereichs mit überwiegend primären OH-Endgruppen überführt.

Starter der Polyole B1) sind solche der Funktionalität 2 - 4 wie Glycerin, Trimethylolpropan und Pentaerythrit; diese werden durch Addition von Oxiranen in die Polyole B1) mit den angegebenen Molmassenbereichen überführt.

Das Polyol B1) hat eine Funktionalität von 2,0 bis 4,0, bevorzugt 2,5 bis 4,0, eine Molmasse von 400 bis 5000 und überwiegend sekundäre OH-Gruppen.

Das Polyol B2) hat eine Funktionalität von 4 bis 8, bevorzugt 4 bis 6, eine Molmasse von 400 bis 4000, bevorzugt 400 bis 3000 und überwiegend primäre OH-Gruppen.

Die Polyole B2) enthalten 10 bis 30 Gew.-Teile, bevorzugt 15 bis 25 Gew.-Teile endständiges Ethylenoxid.

Polyole B1) werden in Mengen von 97,5 bis 70 Gew.-Teile, bevorzugt 97,5 bis 80 Gew.-Teile und Polyole B2) in Mengen von 2,5 bis 30 Gew.-Teile, bevorzugt 2,5 bis 20 Gew.-Teile bezogen auf 100 Gew.-Teile B1) und B2 verwendet.

Im erfindungsgemäßen Verfahren wird flüssiges Kohlendioxid in einer Siebe enthaltenden Entspannungskammer im Strom der Komponenten A bis G entspannt.

Die Entspannungskammer zur Reduzierung des Drucks im Strom der Komponenten A bis G besteht aus mindestens einer Siebplatte mit Maschenweiten von 0,025 - 0,3 mm, bevorzugt 0,05 - 0,2 mm, besonders bevorzugt 0,05 - 0,15 mm, wobei die Summe der Querschnitte der Bohrungen 10 - 40 %, bevorzugt 20 - 30 % der Siebplatte ausmacht.
Polyetherpolyol 1
Polyetherpolyol der OH-Zahl 45 mit überwiegend sekundären OH-Gruppen durch Addition von 85 Gew.-% Propylenoxid und 15 Gew.-% Ethylenoxid an Trimethylolpropan als Starter.
Polyetherpolyol 2
Polyetherpolyol 2 der OH-Zahl 180 mit überwiegend primären OH-Endgruppen durch Addition von 80 Gew.-% Propylenoxid und 20 Gew.-% endständigem Ethylenoxid an Sorbit als Starter.
Isocyanat 1
Toluylendiisocyanat mit 80 Gew.-% 2,4- und 20 Gew.-% 2,6-Isomeren.
Isocyanat 2
Toluylendiisocyanat mit 65 Gew.-% 2,4- und 35 Gew.-% 2,6-Isomeren.

### Verarbeitungsbeispiele

Auf einer UBT-Verschäumungsanlage der Firma Hennecke, D 53754 Birlinghoven, ausgerüstetet mit einer in Le A 30 508 beschriebenen Siebentspannungskammer werden zur Reaktion gebracht:

### 1. Beispiel

| | |
|---|---|
| Polyol 1 (B1) | 85 Gew.-Teile |
| Polyol 2 (B2) | 15 Gew.-Teile |
| Aktivator A1 (Air Products) | 0,1 Gew.-Teile |
| Stabilisator OS 22 (Bayer AG) | 1,3 Gew.-Teile |
| Zinndiethylhexoat | 0,1 Gew.-Teile |
| Wasser | 4,2 Gew.-Teile |
| flüssiges CO₂ | 4,0 Gew.-Teile |
| Isocyanat 1 | 34,0 Gew.-Teile |
| Isocyanat 2 | 22,7 Gew.-Teile |
| TDI gesamt | 56,7 Gew.-Teile |

Es ist ein Blockschaumstoff herstellbar, der sich problemlos bezüglich Lauflänge, Schlierenfreiheit, Bodenzone und Zellstruktur fahren läßt.

| Mechanische Eigenschaften: | |
|---|---|
| Rohdichte | 16,8 kg/m³ |
| Zugfestigkeit | 92 kPa |
| Bruchdehnung | 120 % |
| Stauchhärte | 2,9 kPa |
| Rückprallelastizität | 46 % |

Die Druckreduktionssiebe der Entspannungskammer sind nach langem Lauf ohne Belag, obwohl ein aktives Polyol verarbeitet wurde.

### 2. Beispiel

| | |
|---|---|
| Polyol 1 (B1) | 90 Gew.-Teile |
| Polyol 2 (B2) | 10 Gew.-Teile |
| Aktivator A1 (Air Products) | 0,1 Gew.-Teile |
| Stabilisator OS 22 (Bayer AG) | 1,3 Gew.-Teile |
| Zinndiethylhexoat | 0,13 Gew.-Teile |
| Wasser | 4,2 Gew.-Teile |
| flüssiges CO₂ | 3,0 Gew.-Teile |
| Isocyanat 1 | 47,8 Gew.-Teile |
| Isocyanat 2 | 8,9 Gew.-Teile |
| TDI gesamt | 56,7 Gew.-Teile |

Der Block läßt sich produktionssicher über einen längeren Zeitraum herstellen.

| Mechanische Eigenschaften: | |
|---|---|
| Rohdichte | 18,3 kg/m³ |
| Zugfestigkeit | 100 kPa |
| Bruchdehnung | 100 % |
| Stauchhärte | 3,3 kPa |
| Rückprallelastizität | 47 % |

### 3. Beispiel

| | |
|---|---|
| Polyol 1 | 85 Gew.-Teile |
| Polyol 2 | 15 Gew.-Teile |
| Aktivator A1 (Air Products) | 0,1 Gew.-Teile |
| Stabilisator OS 22 (Bayer AG) | 1,3 Gew.-Teile |
| Zinndiethylhexoat | 0,13 Gew.-Teile |
| Wasser | 4,2 Gew.-Teile |
| flüssiges CO₂ | 3,0 Gew.-Teile |
| Isocyanat 1 | 48,2 Gew.-Teile |
| Isocyanat 2 | 8,5 Gew.-Teile |
| TDI gesamt | 56,7 Gew.-Teile |

Der Schaumstoff läßt sich produktionssicher über einen längeren Zeitraum herstellen.

| Mechanische Eigenschaften: | |
|---|---|
| Rohdichte | 18,4 kg/m³ |
| Zugfestigkeit | 99 kPa |
| Bruchdehnung | 120 % |
| Stauchhärte | 3,5 kPa |
| Rückprallelastizität | 47 % |

### 4. Beispiel (Vergleich)

| | |
|---|---|
| Polyol 1 | 100 Gew.-Teile |
| Polyol 2 | - |
| Aktivator A1 (Air Products) | 0,1 Gew.-Teile |
| Stabilisator OS 22 | 1,3 Gew.-Teile |
| Zinndiethylhexoat | 0,1 Gew.-Teile |
| Wasser | 5,0 Gew.-Teile |
| Methylenchlorid | 6,0 Gew.-Teile |
| Isocyanat 1 | 60,5 Gew.-Teile |

| Mechanische Eigenschaften: | |
|---|---|
| Rohdichte | 17,0 kg/m³ |
| Zugfestigkeit | 90 kPa |
| Bruchdehnung | 95 % |
| Stauchhärte | 2,4 kPa |
| Rückprallelastizität | 40 % |

Im Beispiel 4 wird eine deutlich geringere Härte als im erfindungsgemäßen Beispiel 1 erreicht, obwohl die Isocyanatmenge hier wesentlich größer ist; die vergleichbare Rohdichte ist jedoch hier an die Verwendung von Methylenchlorid gebunden. Die Verwendung einer Isocyanatkombination wie in 1 führt zu Instabilitäten im Block.

### Beispiel 5 (Vergleich)

| | |
|---|---|
| Polyol 1 | 100 Gew.-Teile |
| Polyol 2 | - |
| Aktivator A1 | 0,1 Gew.-Teile |
| Stabilisator OS 22 | 1,3 Gew.-Teile |
| Zinndiethylhexoat | 0,13 Gew.-Teile |
| Wasser | 4,7 Gew.-Teile |
| flüssiges CO₂ | 3,0 Gew.-Teile |
| Isocyanat 1 | 56,7 Gew.-Teile |

| Mechanische Eigenschaften: | |
|---|---|
| Rohdichte | 17,0 kg/m³ |
| Zugfestigkeit | 110 kPa |
| Bruchdehnung | 95 % |
| Stauchhärte | 1,9 kPa |
| Rückprallelastizität | 42 % |

Die ohne Methylenchlorid maximal, d.h. ohne Kernverfärbungsschäden einsetzbare Isocyanatmenge in Beispiel 5 ergibt im erfindungsgemäßen Beispiel 1 Schaumstoffe mit wesentlich höherer Stauchhärte und besserer Elastizität. Bei Verwendung einer Isocyanatkombination wie in Beispiel 1 resultiert eine Instabilität des Schaumstoffs.

## Patentansprüche

1. Verfahren zur Herstellung von elastischen Blockweichschaumstoffen durch Umsetzung von
A) Polyisocyanaten mit
B) mindestens zwei gegenüber Isocyanaten reaktionsfähige Wasserstoffatome aufweisende Verbindungen vom Molekulargewicht 400 bis 10 000,
C) Wasser und gegebenenfalls organischen Treibmitteln
D) Stabilisatoren bekannter Art,
E) Aktivatoren bekannter Art
F) weiteren an sich bekannten Hilfs- und Zusatzmitteln
dadurch gekennzeichet, daß die Polyolkomponente B) zusammengesetzt ist aus
B1) mindestens zwei gegenüber Isocyanaten reaktionsfähige Wasserstoffatome aufweisende Verbindungen des Molekulargewichts 2 000 bis 10 000 und einer Funktionalität von 2 bis 4,
B2) mindestens vier gegenüber Isocyanaten reaktionsfähige Wasserstoffatome aufweisende Verbindungen des Molekulargewichts 400 bis 4 000, bevorzugt 500 bis 3 000, einer Funktionalität von 4 bis 8, gestartet mit Mannit, Sorbit, Sucrose oder Lactose
B3) gegebenenfalls niedermolekularen Vernetzern des Molekulargewichts 32 bis 399 und dass
G) flüssiges Kohlendioxid, das in einer Siebe enthaltenden Entspannungskammer vor dem Produktaustrag entspannt wird, Verwendung findet.

2. Verfahren nach Anspruch 1, **dadurch gekennzeichnet, daß** die Polyole B2) 10 - 30, bevorzugt 15 - 25 Gew.-% endständiges Ethylenoxid enthalten.

3. Verfahren nach Anspruch 1 oder 2, **dadurch gekennzeichnet, daß** die Polyole B1) in Mengen von 97,5 bis 70, bevorzugt 97,5 bis 80 und die Polyole B2) von 2,5 bis 30, bevorzugt 2,5 bis 20 Gew.-Teile, bezogen auf 100 Teile Polyolkomponente B1) und 2), verwendet werden.

4. Verfahren nach Anspruch 1 bis 3, **dadurch gekennzeichnet, daß** flüssiges Kohlendioxid in einer Siebe enthaltenden Entspannungskammer im Strom der Komponenten A bis G entspannt wird.

5. Verfahren nach Anspruch 1 bis 4, **dadurch gekennzeichnet, daß** die Entspannungskammer zur Reduzierung des Drucks im Strom der Komponenten A bis G aus mindestens einer Siebplatte mit Maschenweiten von 0,025 - 0,3, bevorzugt 0,05 - 0,2, besonders bevorzugt 0,05 - 0,15 mm Maschenweite besteht, wobei die Summe der Querschnitte der Bohrungen 10 - 40, bevorzugt 20 - 30 % der Siebplatte ausmachen.

## Claims

1. Process for the production of flexible slabstock polyurethane foams by the reaction of
A) polyisocyanates with
B) compounds of a molecular weight of from 400 to 10,000 having at least two hydrogen atoms capable of reacting with isocyanates,
C) water and optionally organic blowing agents,
D) stabilisers of known type,
E) activators of known type,
F) further auxiliary agents and additives known per se,
**characterised in that** the polyol component B) is composed of
B1) compounds of a molecular weight of from 2,000 to 10,000 and a functionality of from 2 to 4 having at least two hydrogen atoms capable of reacting with isocyanates,
B2) compounds of a molecular weight of from 400 to 4,000, preferably 500 to 3,000, and a functionality of from 4 to 8 having at least four hydrogen atoms capable of reacting with isocyanates, and started with mannitol, sorbitol, sucrose or lactose,
B3) optionally low molecular weight cross-linking agents of a molecular weight of from 32 to 399, and that
G) liquid carbon dioxide is used which is expanded in an expansion chamber comprising sieves which is upstream of the product discharge

2. Process according to Claim 1, **characterised in that** the polyols B2) comprise from 10 to 30, preferably 15 to 25 wt.%, ethylene oxide in the end position.

3. Process according to Claim 1 or 2, **characterised in that** the polyols Bl) are used in quantities of from 97.5 to 70, preferably 97.5 to 80 parts by weight and the polyols B2) in quantities of from 2.5 to 30, preferably 2.5 to 20 parts by weight, in relation to 100 parts of the polyol component B1) and 2).

4. Process according to Claims 1 to 3, **characterised in that** liquid carbon dioxide is expanded in an expansion chamber comprising sieves, in the stream of the components A to G.

5. Process according to Claims 1 to 4, **characterised in that** the expansion chamber for reducing the pressure in the stream of the components A to G consists of at least one sieve plate having mesh widths of from 0.025 to 0.3, preferably 0.05 to 0.2, particularly preferably 0.05 to 0.15 mm, mesh width, wherein the sum of the cross sections of the holes accounts for from 10 to 40, preferably 20 to 30%, of the sieve plate.

## Revendications

1. Procédé de préparation de blocs de mousse élastiques par réaction
A) de polyisocyanates, avec
B) au moins deux composés présentant des atomes d'hydrogène réactifs vis-à-vis des isocyanates de masse moléculaire 400 à 10 000,
C) de l'eau et éventuellement des agents moussants organiques,
D) des stabilisants connus,
E) des activateurs connus,
F) d'autres agents auxiliaires et additifs connus,
**caractérisé en ce que** le composant polyol B) est composé
B1) d'au moins deux composés présentant des atomes d'hydrogène réactifs vis-à-vis des isocyanates de masse moléculaire de 2000 à 10 000 et d'une fonctionnalité de 2 à 4,
B2) d'au moins deux composés présentant des atomes d'hydrogène réactifs vis-à-vis des isocyanates de masse moléculaire de 400 à 4000, de préférence 500 à 3000, d'une fonctionnalité de 4 à 8, obtenus à partir de mannitol, sorbitol, saccharose ou lactose,
B3) éventuellement des agents réticutants de faible poids moléculaire de masse molaire 32 à 399 et **en ce qu'**on utilise
G) du dioxyde de carbone liquide qui est détendu dans une chambre de détente contenant un tamis avant la sortie du produit.

2. Procédé selon al revendication 1, **caractérisé en ce que** les polyols B2) contiennent 10 - 30, de préférence 15 - 25 % en poids d'oxyde d'éthylène terminal.

3. Procédé selon la revendication 1 ou 2, **caractérisé en ce qu'**on utilise les polyols B1) en des quantités de 97,5 à 70, de préférence 97,5 à 80 et les polyols B2) en des quantités de 2,5 à 30, de préférence 2,5 à 20 parties en poids, rapporté à 100 parties des composants polyols B1) et B2).

4. Procédé selon la revendication 1 à 3, **caractérisé en ce que** le dioxyde de carbone liquide est détendu dans une chambre de détente contenant un tamis dans le courant des composants A à G.

5. Procédé selon la revendication 1 à 4, **caractérisé en ce que** la chambre de détente pour réduite la pression dans le courant des composants A à G comprend au moins une plaque de tamis avec une grandeur de mailles de 0,025 - 0,3, de préférence 0,05 - 0,2, en particulier de préférence 0,05 - 0,15 mm de largeur de maille, la somme des coupes transversales des orifices étant 10 - 40, de préférence 20 - 30 % de la plaque de tamis.
